# EUROPEAN PATENT SPECIFICATION

(11) **EP 3 650 202 B1**
(45) Date of publication and mention of the grant of the patent: **04.11.2020**
(21) Application number: 19167630.3
(22) Date of filing: 05.04.2019
(51) Int. Cl.: B29C 64/124, B29C 64/20, B01F 3/08, B01F 7/00, B01F 13/08, B33Y 30/00

(54) **THREE-DIMENSIONAL PRINTING DEVICE WITH STIRRING MECHANISM**
DREIDIMENSIONALE DRUCKVORRICHTUNG MIT RÜHRMECHANISMUS
IMPRIMANTE TRIDIMENSIONNELLE COMPORTANT UN MÉCANISME D'AGITATION

(30) Priority: 12.11.2018 TW 107140091
(43) Date of publication of application: 13.05.2020
(73) Proprietor: XYZprinting, Inc., New Taipei City 22201 (TW); Kinpo Electronics, Inc., New Taipei City 22201 (TW)
(72) Inventor: WANG, Chia-Hsiang, 22201 New Taipei City (TW); SUNG, Chuan-Rung, 22201 New Taipei City (TW); HUANG, Hao-Jen, 22201 New Taipei City (TW)
(74) Representative: 2K Patentanwälte Blasberg Kewitz & Reichel

(56) References cited:
- EP-A1- 3 323 615
- CN-B- 104 943 164
- JP-A- H0 899 360

## Description

### FIELD OF THE INVENTION

The technical field of the present invention relates to a stirring structure of a three-dimensional printing device, and more particularly to a three-dimensional printing device with a stirring mechanism.

### BACKGROUND OF THE INVENTION

In recent years, different methods of using the additive manufacturing technology such as a layer-by-layer construction model to construct three dimensional (3D) models have been proposed. For example, a printing module of a printing device generally moves on the XY plane above the base of spatial coordinates XYZ constructed according to the design data of a 3D model to construct the correct shape of a cross-sectional layer by construction materials.

In the technology of using light to cure a construction material to form a three-dimensional object, a printing module is dipped into liquid molding material contained in a vessel, and a light source module on the plane XY is projected onto the liquid molding material of the construction material, so that the liquid molding material is cured and stacked on a moving platform of the printing module. Therefore, the movement of the moving platform of the printing module in a layer-by-layer manner along the Z-axis drives the liquid molding material to be cured layer by layer and stacked to form a three-dimensional object.

Wherein, if a condition such as pigment precipitation, high material temperature, or excessive curing occurs in the liquid molding material, scrapers will be installed in the vessel and distributed all along the widthwise direction of the vessel, and the scrapers will be moved in a straight line reciprocately along the lengthwise direction of the vessel to achieve the effect of stirring the liquid molding material. However, the aforementioned stirring method has the following drawbacks: 1. It is necessary to remove the scraper to change the vessel. 2. The scrapers are distributed all along the widthwise direction of the vessel, so that the stirring operation cannot be performed at the same time when the three-dimensional object is printed.

In view of the aforementioned drawbacks of the prior art, the discloser of the present invention based on years of experience to conduct extensive research and experiment, and finally provided a feasible solution to overcome the drawbacks of the prior art. Document CN 104 943 164 B discloses a three-dimensional printing device with a stirring mechanism, comprising: a vessel; a molding platform, installed above the vessel; a light source module, installed under the vessel; and a rotary stirring structure. It also discloses a rotary stirring structure, comprising: a stirrer; and a driver, coupled to the stirrer, and driving the stirrer to rotate and move with respect to the vessel.

### SUMMARY OF THE INVENTION

Therefore, it is a primary objective of the present invention to overcome the drawbacks of the prior art by providing a three-dimensional printing device with an enhanced stirring mechanism that can stir the liquid molding material more uniformly and prevent the afore-mentioned drawbacks of the prior art, in particular the pigment precipitation, high material temperature, and excessive curing of the liquid molding material.

This problem is solved by a three-dimensional printing device with a stirring mechanism as claimed by claim 1 and 8, respectively. Further advantageous embodiments are the subject-matter of the dependent claims.

According to the present invention there is provided a three-dimensional printing device with a stirring mechanism that uses a rotary stirring structure capable of rotating and moving with respect to a vessel, so that it simply needs to remove the rotary stirring structure in order to change the vessel, and the stirring operation can be performed at the same time while printing the three-dimensional object, so as to improve the convenience of using the three-dimensional printing device.

In an exemplary embodiment of the present invention, the present invention provides a three-dimensional printing device with a stirring mechanism, comprising: a vessel; a molding platform, elevatably installed above the vessel; a light source module, installed under the vessel; and a rotary stirring structure, comprising: a magnetic stirrer, placed inside the vessel; a magnetic turntable, installed under the vessel and magnetically attracted to the magnetic stirrer; and a driver, for driving the magnetic turntable to rotate and move, so as to drive the magnetic stirrer to rotate and move with respect to the vessel.

In an embodiment of the present invention, the present invention provides a three-dimensional printing device with a stirring mechanism, comprising: a vessel; a molding platform, elevatably installed above the vessel; a light source module, installed under the vessel; and a rotary stirring structure, comprising: a stirrer; and a driver, coupled to the stirrer, and capable of driving the stirrer to be placed into the vessel and driving the stirrer to rotate and move with respect to the vessel.

Compared with the prior art that simply uses the scrapers to move in a straight line reciprocately along the lengthwise direction of the vessel, the rotary stirring structure of the present invention can stir the liquid molding material more uniformly by the rotation method and prevent the pigment precipitation, high material temperature, and excessive curing of the liquid molding material.

Based on the description above, the rotary stirring structure can be detached from the vessel directly for changing the vessel, and thus the step of removing the scrapers of the conventional three-dimensional printing device to change the vessel can be omitted to improve the convenience of maintaining, repairing or changing the vessel.

Based on the description above, the rotary stirring structure may be move to the periphery of the vessel to perform the stirring operation when the three-dimensional object is printed, so as to improve the convenience of using the three-dimensional printing device.

### BRIEF DESCRIPTION OF THE DRAWINGS

FIG. 1 is a perspective view of a three-dimensional printing device of the present invention;
FIG. 2 is a schematic view of a rotary stirring structure configured to be corresponsive to a vessel in accordance with the present invention;
FIG. 3 is a schematic view showing a using status of a three-dimensional printing device of the present invention;
FIG. 4 is a schematic view showing a using status of a rotary stirring structure of the present invention;
FIG. 5 is a schematic view showing another using status of a rotary stirring structure of the present invention;
FIG. 6 is a schematic view showing a further using status of a rotary stirring structure of the present invention;
FIG. 7 is a perspective view of a magnetic stirrer of the present invention;
FIG. 8 is another perspective view of a magnetic stirrer of the present invention;
FIG. 9 is a cross-sectional view of a magnetic stirrer of the present invention;
FIG. 10 is a perspective view of a magnetic turntable connected to a driver in accordance with the present invention;
FIG. 11 is a perspective view of a three-dimensional printing device in accordance with another embodiment of the present invention;
FIG. 12 is a schematic view showing a using status of a three-dimensional printing device in accordance with another embodiment of the present invention; and
FIG. 13 is a perspective view of a stirrer of the present invention.

### DESCRIPTION OF THE PREFERRED EMBODIMENTS

The technical contents of the present invention will become apparent with the detailed description of preferred embodiments accompanied with the illustration of related drawings as follows. It is noteworthy that the embodiments and figures disclosed herein are to be considered illustrative rather than restrictive.

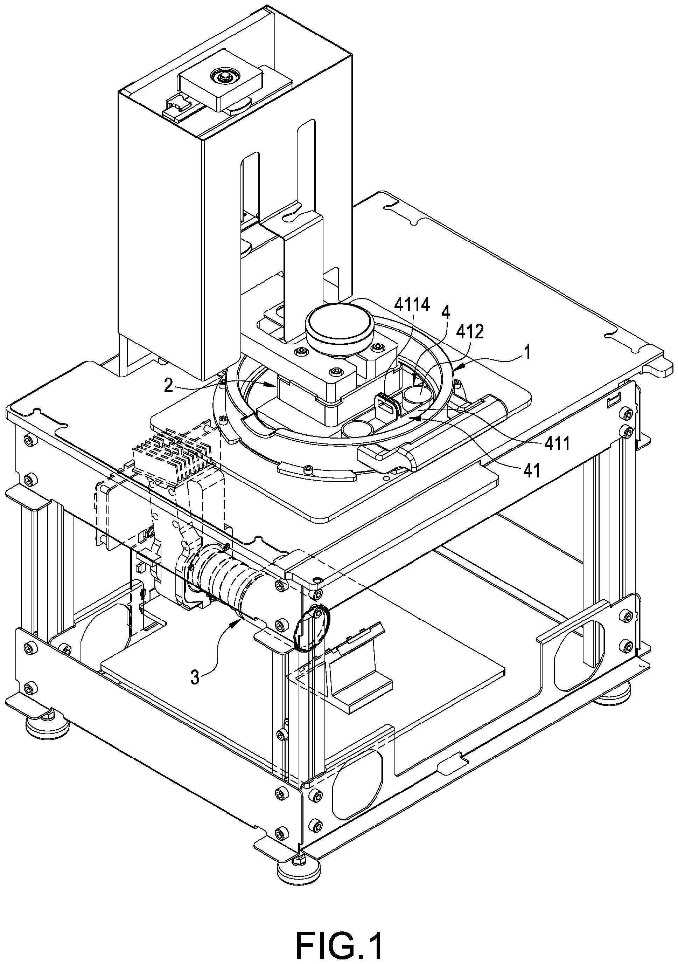

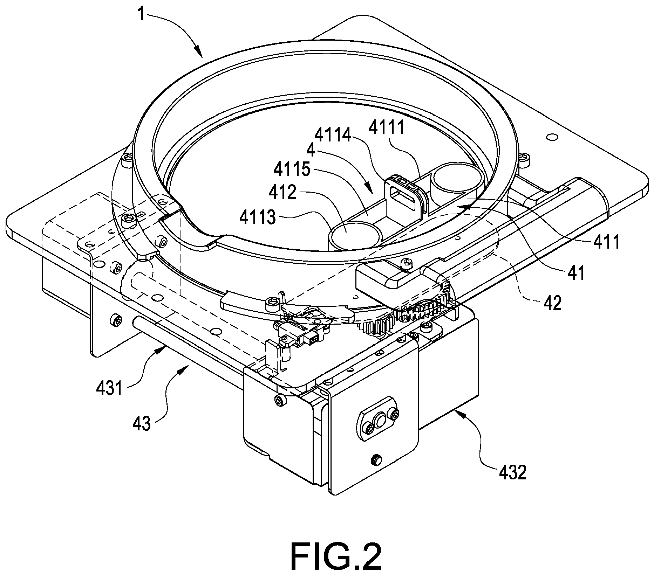

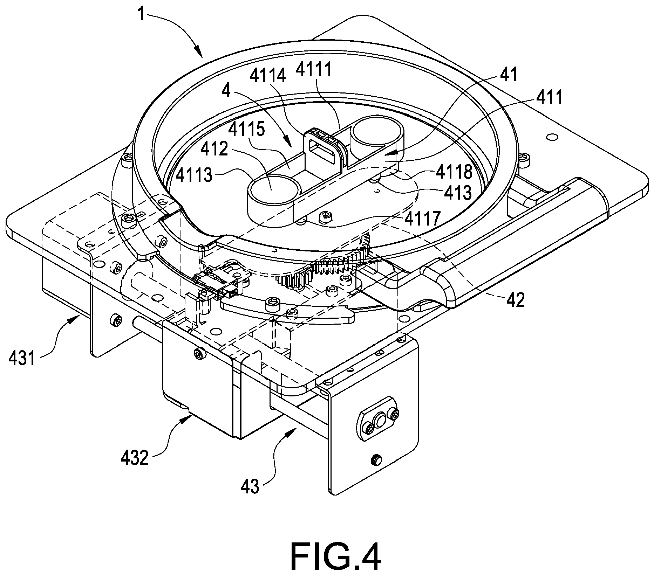

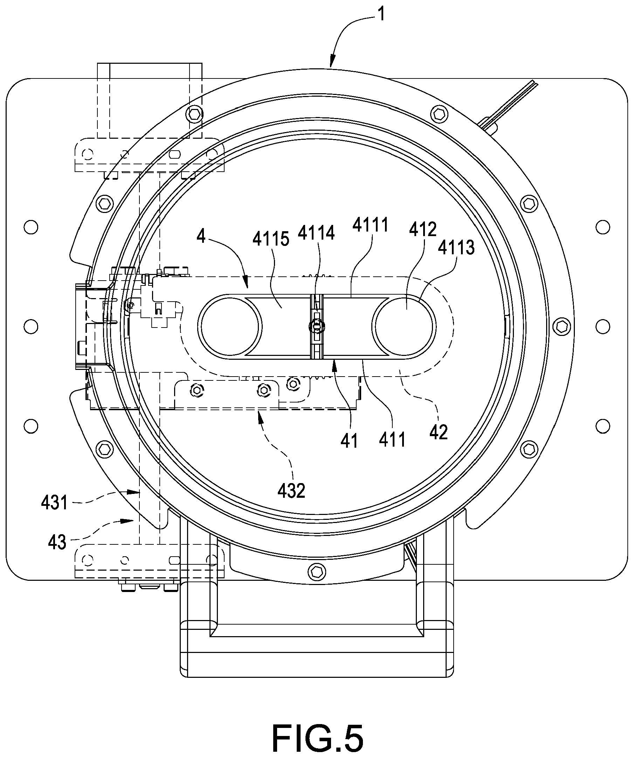

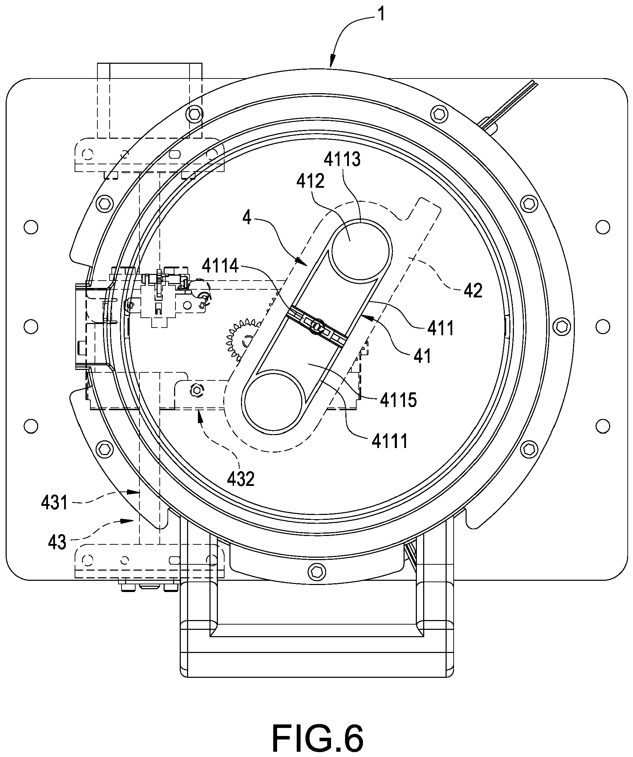

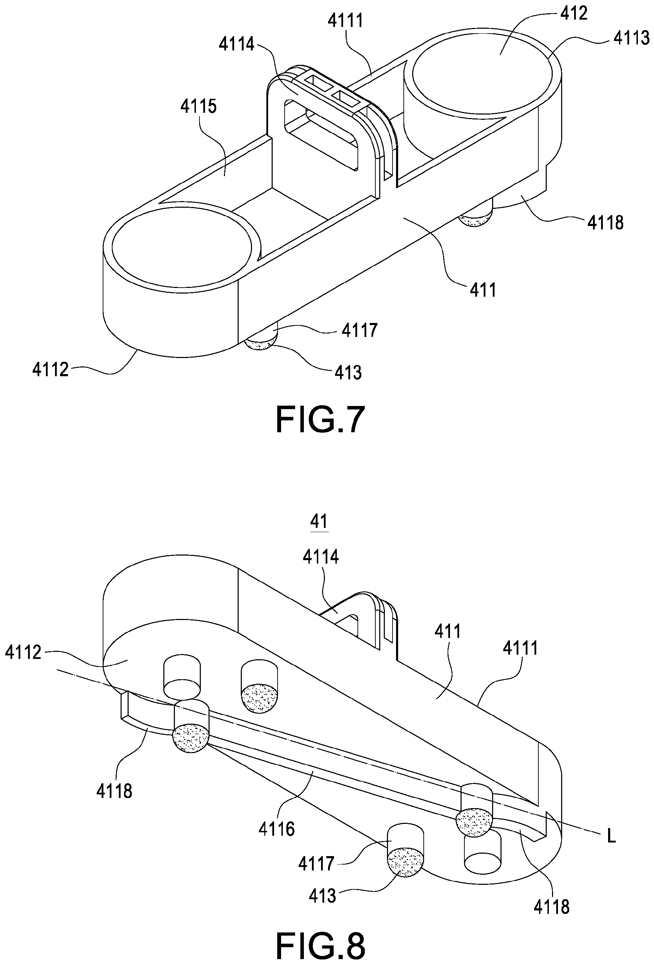

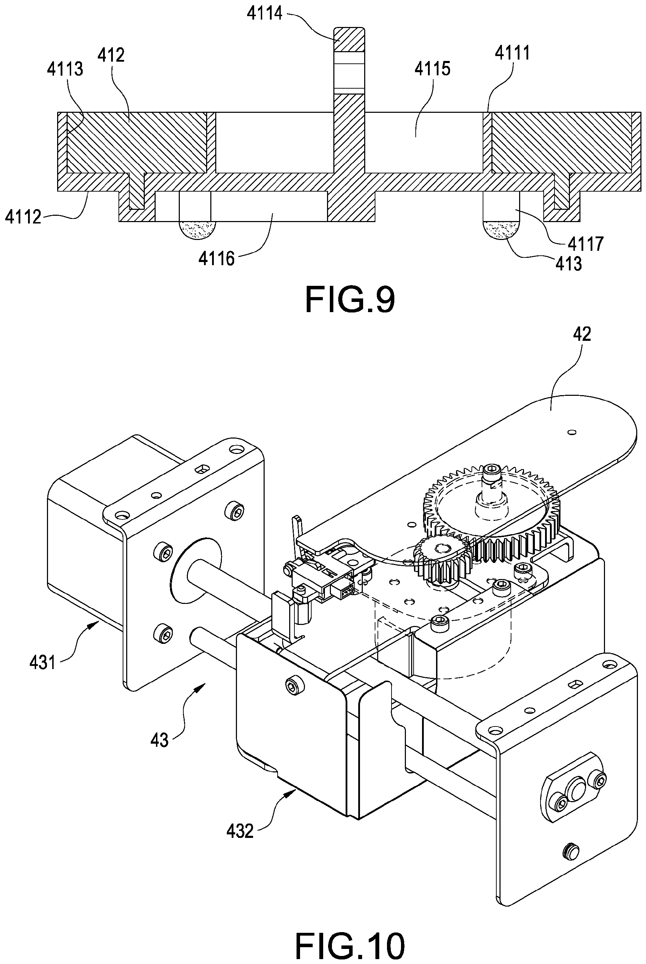

With reference to FIGS. 1 to 10 for a three-dimensional printing device with a stirring mechanism in accordance with the present invention, the three-dimensional printing device 10 comprises a vessel 1, a molding platform 2, a light source module 3 and a rotary stirring structure 4.

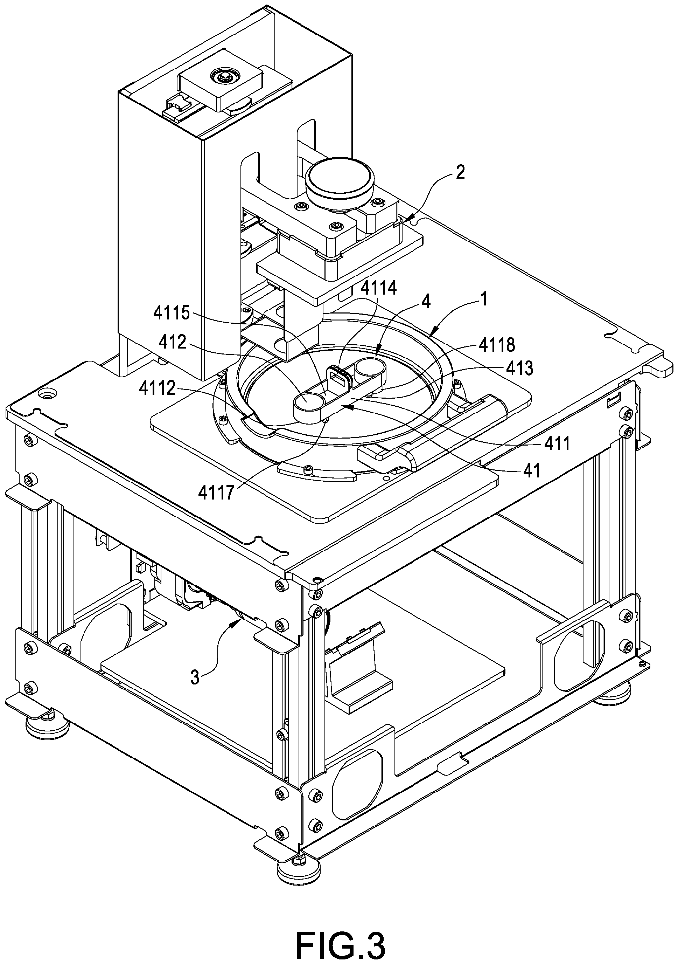

In FIGS. 1 and 3, the vessel 1 is provided for containing a liquid molding material; the molding platform 2 is elevatably installed above the vessel 1; and the light source module 3 is installed under the vessel 1 and capable of projecting a light onto the liquid molding material to cure the liquid molding material and stack the liquid molding material layer by layer onto the molding platform 2 to form a three-dimensional object.

In FIGS. 1 to 10, the rotary stirring structure 4 comprises a magnetic stirrer 41, a magnetic turntable 42 and a driver 43, and the magnetic stirrer 41 is placed into the vessel 1, and the magnetic stirrer 41 includes a stirring block 411, two magnetic elements 412 and a plurality of legs 413.

Wherein, the stirring block 411 has a top surface 4111 and a bottom surface 4112 relatively configured with one another, and two insert slots 4113 are downwardly formed at both ends of the top surface 4111, and a handle 4114 extends upwardly from the middle of the stirring block 411, and two weight reducing grooves 4115 are downwardly formed on the top surface 4111 and between the handle 4114 and the two insert slots 4113, and the handle 4114 is provided for users to hold the magnetic stirrer 4 and remove/place the magnetic stirrer 41 from/into the vessel 1 conveniently, and the weight reducing groove 4115 is provided for reducing the weight of the magnetic stirrer 41, so that the magnetic stirrer 41 can be rotated smoothly by a slight force.

In addition, an inclined tab 4116 and a plurality of hollow columns 4117 extend from the bottom surface 4112, and a diagonal L is defined on the bottom surface 4112, and the inclined tab 4116 is disposed along the diagonal L, so that the inclined tab 4116 is disposed in a larger range of the bottom surface 4112, and two curved sections 4118 are disposed at both ends of the inclined tab 4116 respectively.

In addition, each magnetic element 412 is embedded into each respective insert slot 4113, and each leg 413 is inserted into each respective hollow column 4117, so that the magnetic elements 412 and the legs 413 can be installed onto the stirring block 411 more securely. Each leg 413 has an end position higher than the top surface of the inclined tab 4116, and the magnetic stirrer 41 just has the legs 413 attached to the vessel 1, and each leg 413 has a material hardness less than the material hardness of the vessel 1 to prevent the legs 413 from scratching, wearing or damaging the vessel 1. Wherein, the vessel 1 of this embodiment is made of glass, and the legs 413 are made of Teflon, but the present invention is not limited by such arrangements.

The magnetic turntable 42 is installed under the vessel 1 and magnetically attracted with the magnetic stirrer 41. In this embodiment, the magnetic element 412 is a magnet, and the magnetic turntable 42 is a magnetically attracted object made of metal such as iron, cobalt-containing metal, and nickel-containing metal. On the other hand, the magnetic turntable 42 is a magnet, and the magnetic element 412 is a magnetically attracted object made of metal such as iron, cobalt-containing metal, and nickel-containing metal.

The driver 43 comprises a moving mechanism 431 and a transmission mechanism 432, and the magnetic turntable 42 is installed onto the transmission mechanism 432 and capable of rotating with the transmission mechanism 432, and the transmission mechanism 432 is installed onto the moving mechanism 431 and capable of moving with the moving mechanism 431, so that the driver 43 can drive the magnetic turntable 42 to rotate and move, so as to drive the magnetic stirrer 41 to rotate and move with respect to the vessel 1.

When a three-dimensional object is printed, the magnetic stirrer 41 and the transmission mechanism 432 must avoid the printing area inside the vessel 1 to allow the light of the light source module 3 to be projected and prevent the molding taken place in the printing area from being blocked by the magnetic stirrer 41 and the transmission mechanism 432. During the stirring process, it is necessary to move the magnetic stirrer 41 to the center of the vessel 1 for the rotating and stirring operation in order to stir liquid molding material uniformly, so that the driver 43 needs to drive the magnetic stirrer 41 and the transmission mechanism 432 to move with respect to the vessel 1.

With reference to FIGS. 3 to 10 for the using statuses of a three-dimensional printing device 10 in accordance with the present invention, the magnetic stirrer 41 is driven by the driver 43 to rotate and move with respect to the vessel 1. Compared with the prior art simply moving the scrapers in a straight line reciprocately along the lengthwise direction of the vessel, the magnetic stirrer 41 of the present invention can stir the liquid molding material more uniformly by the rotation method to prevent the occurrence of pigment precipitation, high material temperature, and excessive curing of the liquid molding material.

When the vessel 1 is change, a user may hold the handle 4114 directly to remove the magnetic stirrer 41 from the vessel 1, so that the step of removing the scrapers to change the vessel can be omitted, and thus improving the convenience of maintaining, repairing or changing the vessel 1.

When a three-dimensional object is printed, the molding platform 2 and the light source module 3 are installed substantially at the middle of the vessel 1, so that the periphery of the vessel 1 is situated at an idle state. Now, the driver 43 and the magnetic turntable 42 can drive the magnetic stirrer 41 to move to the periphery of the vessel 1 to perform the stirring operation, so as to improve the convenience of using the three-dimensional printing device 10.

In addition, an inclined tab 4116 extends from the bottom surface 4112 of the magnetic stirrer 41. When the magnetic stirrer 41 rotates, the inclined tab 4116 can be set on a larger length of the bottom surface 4112 to stir more liquid molding material since the inclined tab 4116 is disposed along the diagonal L, and a curved section 4118 is disposed at an end of the inclined tab 4116, so that a smaller resistance is exerted against the ends of the inclined tab 4116 to allow the inclined tab 4116 to rotate more easily.

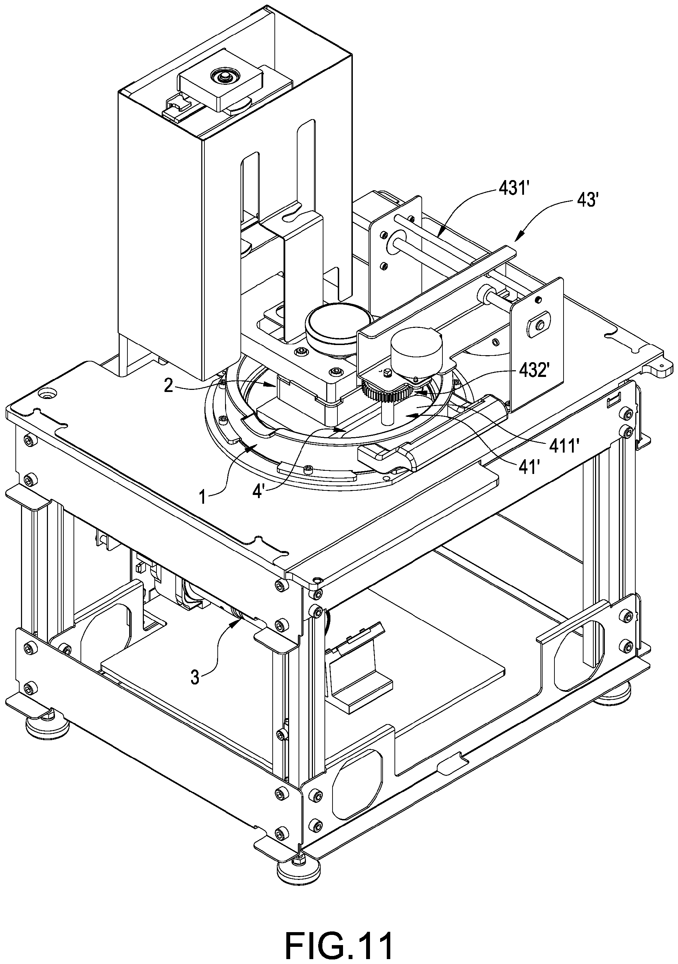

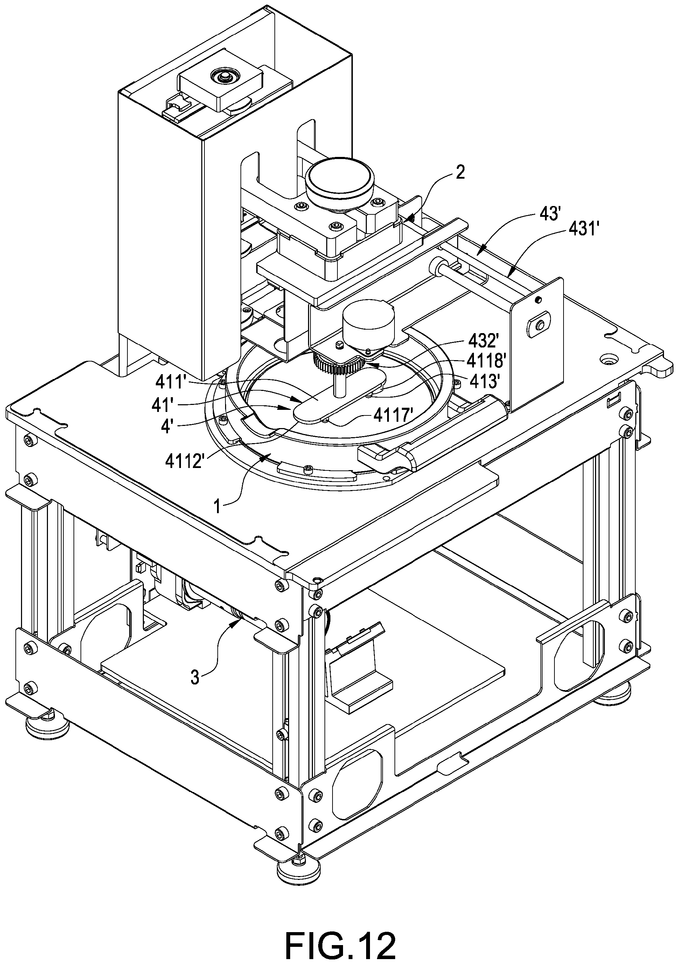

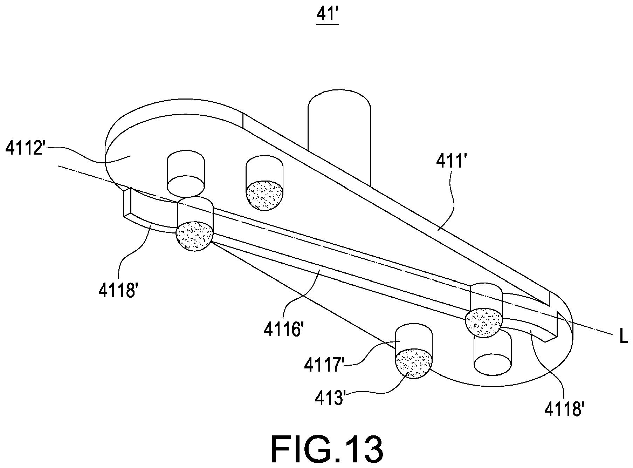

With reference to FIGS. 11 to 13 for a three-dimensional printing device 10 in accordance with another embodiment of the present invention, this embodiment is substantially the same as the previous embodiment as shown in FIGS. 1 to 10, except that the rotary stirring structure 4' of this embodiment is different.

Specifically, the rotary stirring structure 4' of this embodiment comprises a stirrer 41' and a driver 43', and the stirrer 41' comprises a stirring block 411' with a bottom surface 4112', an inclined tab 4116' extending from the bottom surface 4112', and a diagonal L defined on the bottom surface 4112', and the inclined tab 4116' is disposed along the diagonal L, and two curved sections 4118' are disposed at both ends of the inclined tab 4116' respectively.

When the magnetic stirrer 41' rotates, the inclined tab 4116' can stir more liquid molding material since the inclined tab 4116' is disposed along the diagonal L, and a curved section 4118' is disposed at an end of the inclined tab 4116', so that a smaller resistance is exerted against the end of the inclined tab 4116' to allow the inclined tab 4116' to rotate more easily. In addition, the stirrer 41' further comprises a plurality of legs 413', and a plurality of hollow columns 4117' extending from the bottom surface 4112', and each leg 413' is inserted into each hollow column 4117', and each leg 413' has an end position higher that the top surface of the inclined tab 4116', and the stirrer 41' just has the legs 413' attached to the vessel 1 only, and each leg 413' has a material hardness less than the material hardness of the vessel 1', so as to prevent the legs 413' from scratching, wearing, or damaging the vessel 1. In this embodiment, the vessel 1 is made of glass, and the legs 413' are made of Teflon, but the present invention is not limited by such arrangements only.

In addition, the driver 43' comprises a moving mechanism 431' and a transmission mechanism 432', and the stirrer 41' is installed directly onto the transmission mechanism 432' and capable of rotating with the transmission mechanism 432', and the transmission mechanism 432' is installed directly onto the moving mechanism 431' and capable of moving with the moving mechanism 431', wherein the moving mechanism 431' is a three-dimensional driver capable of driving the stirrer 41' to move in the X-, Y-, and Z-axis directions, so that when the driver 43' is coupled to the stirrer 41', the driver 43' can drive the stirrer 41' to be placed into the vessel 1 and can drive the stirrer 41' to rotate and move with respect to the vessel 1. The stirrer 41' stirs the liquid molding material by a rotation method. When the vessel 1 is changed, the moving mechanism 431' can drive the stirrer 41' to be detached from the vessel 1 directly. When a three-dimensional object is printed, the moving mechanism 431' can drive the stirrer 41' to move directly to the periphery of the vessel 1 for the stirring operation, so as to achieve the same effects of the embodiment as depicted in FIGS. 1 to 10.

When the three-dimensional object is printed, the moving mechanism 431' of the driver 43' can remove the stirrer 41' from the vessel 1, so that a printing area of the vessel is available for the printing operation.

## Claims

1. A three-dimensional printing device with a stirring mechanism, comprising:
a vessel (1);
a molding platform (2), elevatably installed above the vessel (1);
a light source module (3), installed under the vessel (1); and
a rotary stirring structure (4), **characterized in that** the rotary stirring structure comprises:
a magnetic stirrer (41), placed inside the vessel (1);
a magnetic turntable (42), installed under the vessel (1) and magnetically attracted to the magnetic stirrer (41); and
a driver (43), for driving the magnetic turntable (42) to rotate and move, so as to drive the magnetic stirrer (41) to rotate and move with respect to the vessel (1).

2. The three-dimensional printing device with a stirring mechanism according to claim 1, wherein the magnetic stirrer (41) comprises a stirring block (411) and two magnetic elements (412), and the stirring block (411) has a top surface (4111), and two insert slots (4113) formed downwardly from both ends of the top surface (4111) respectively, and each of the magnetic elements (412) is embedded into each respective insert slot (4113).

3. The three-dimensional printing device with a stirring mechanism according to claim 2, wherein the top surface (4111) has a handle (4114) extending upward from the middle thereof.

4. The three-dimensional printing device with a stirring mechanism according to claim 3, wherein the top surface (4111) has two weight reducing grooves (4115) formed downwardly between the handle (4114) and the two insert slots (4113).

5. The three-dimensional printing device with a stirring mechanism according to claim 2, wherein the stirring block (411) has a bottom surface (4112), an inclined tab (4116) extending from the bottom surface (4112), and the bottom surface (4112) defines a diagonal (L), and the inclined tab (4116) is laid along the diagonal (L), and both ends of the inclined tab (4116) have two curved sections (4118) respectively.

6. The three-dimensional printing device with a stirring mechanism according to claim 5, wherein the magnetic stirrer (41) further comprises a plurality of legs (413), the bottom surface (4112) has a plurality of hollow columns (4117) extending therefrom, and each of the legs (413) is inserted into each respective hollow column (4117), and each leg (413) has an end position higher than the top surface of the inclined tab (4116), and each leg (413) has a material hardness less than the material hardness of vessel (1).

7. The three-dimensional printing device with a stirring mechanism according to claim 1, wherein the driver (43) comprises a moving mechanism (431) and a transmission mechanism (432), and the magnetic turntable (42) is installed onto the transmission mechanism (432) and capable of rotating with the transmission mechanism (432), and the transmission mechanism (432) is installed onto the moving mechanism (431) and capable of moving with the moving mechanism (431).

8. A three-dimensional printing device with a stirring mechanism, comprising:
a vessel (1);
a molding platform (2), elevatably installed above the vessel (1);
a light source module (3), installed under the vessel (1); and
a rotary stirring structure (4'), comprising:
a stirrer (41'); and
a driver (43'), coupled to the stirrer (41'), and capable of driving the stirrer (41') to rotate and move with respect to the vessel (1), **characterized in that** the driver (43) is capable of driving the stirrer to be placed into the vessel (1).

9. The three-dimensional printing device with a stirring mechanism according to claim 8, wherein the stirrer (41') includes a stirring block (411'), and the stirring block (411') has a bottom surface (4112'), an inclined tab (4116') extending from the bottom surface (4112'), and a diagonal (L) defined by the bottom surface (4112'), and the inclined tab (4116') is laid along the diagonal (L), and both ends of the inclined tab (4116') have two curved sections (4118') respectively.

10. The three-dimensional printing device with a stirring mechanism according to claim 9, wherein the stirrer (41') further includes a plurality of legs (413'), and the bottom surface (4112') has a plurality of hollow columns (4117') extending therefrom, and each of the legs (413') is inserted into each respective hollow column (4117'), and each leg (413') has an end position higher than the top surface of the inclined tab (4116'), and each leg (413') has a material hardness less than the material hardness of the vessel (1').

11. The three-dimensional printing device with a stirring mechanism according to claim 8, wherein the driver (43') comprises a moving mechanism (431') and a transmission mechanism (432'), and the stirrer (41') is installed onto the transmission mechanism (432') and capable of rotating with the transmission mechanism (432'), and the transmission mechanism (432') is installed onto the moving mechanism (431') and capable of moving with the moving mechanism (431').

## Patentansprüche

1. Dreidimensionale Druckvorrichtung mit einem Rührmechanismus, umfassend:
ein Gefäß (1);
eine Formplattform (2), die oberhalb des Gefäßes (1) höhenverstellbar installiert ist;
ein Lichtquellenmodul (3), das unterhalb des Gefäßes (1) installiert ist; und
eine rotierende Rührstruktur (4), **dadurch gekennzeichnet, dass** die rotierende Rührstruktur umfasst:
einen Magnetrührer (41), der im Inneren des Gefäßes (1) angeordnet ist;
einen magnetischen Drehtisch (42), der unterhalb des Gefäßes (1) installiert ist und magnetisch von dem Magnetrührer (41) angezogen wird; und
einen Antrieb (43), um den magnetischen Drehtisch (42) zur Drehung und Bewegung anzutreiben, um den Magnetrührer (41) zur Drehung und Bewegung relativ zu dem Gefäß (1) anzutreiben.

2. Dreidimensionale Druckvorrichtung mit einem Rührmechanismus nach Anspruch 1, wobei der Magnetrührer (41) einen Rührblock (411) und zwei magnetische Elemente (412) umfasst, und wobei der Rührblock (411) eine Oberseite (4111) und zwei Einsatzschlitze (4113) aufweist, die jeweils von beiden Enden der Oberseite (4111) sich nach unten erstreckend ausgebildet sind, und wobei jedes der magnetischen Elemente (412) in den jeweiligen Einsatzschlitz (4113) eingeführt ist.

3. Dreidimensionale Druckvorrichtung mit einem Rührmechanismus nach Anspruch 2, wobei die Oberseite (4111) einen Griff (4114) aufweist, der sich von ihrer Mitte nach oben erstreckt.

4. Dreidimensionale Druckvorrichtung mit einem Rührmechanismus nach Anspruch 3, wobei die Oberseite (4111) zwei gewichtsreduzierende Nuten (4115) aufweist, die sich nach unten erstreckend zwischen dem Griff (4114) und den beiden Einsatzschlitzen (4113) ausgebildet sind.

5. Dreidimensionale Druckvorrichtung mit einem Rührmechanismus nach Anspruch 2, wobei der Rührblock (411) eine Unterseite (4112) und eine geneigte Lasche (4116) aufweist, die sich von der Unterseite (4112) aus erstreckt, und wobei die Unterseite (4112) eine Diagonale (L) definiert, und wobei die geneigte Lasche (4116) entlang der Diagonale (L) angeordnet ist, und wobei beide Enden der geneigten Lasche (4116) jeweils zwei gekrümmte Abschnitte (4118) aufweisen.

6. Dreidimensionale Druckvorrichtung mit einem Rührmechanismus nach Anspruch 5, wobei der Magnetrührer (41) weiterhin eine Vielzahl von Schenkeln (413) aufweist, die Unterseite (4112) eine Vielzahl von hohlen Säulen (4117) aufweist, die sich ausgehend von dieser erstrecken, und jeder der Schenkel (413) in jede entsprechende hohle Säule (4117) eingesetzt ist, und jeder Schenkel (413) eine Endposition aufweist, die höher als die Oberseite der geneigten Lasche (4116) ist, und jeder Schenkel (413) eine Materialhärte aufweist, die geringer als die Materialhärte des Gefäßes (1) ist.

7. Dreidimensionale Druckvorrichtung mit einem Rührmechanismus nach Anspruch 1, wobei der Antrieb (43) einen Bewegungsmechanismus (431) und einen Kraftübertragungsmechanismus (432) umfasst, und der magnetische Drehtisch (42) auf den Kraftübertragungsmechanismus (432) aufgesetzt ist und sich gemeinsam mit dem Kraftübertragungsmechanismus (432) drehen kann, und der Kraftübertragungsmechanismus (432) auf den Bewegungsmechanismus (431) aufgesetzt ist und sich gemeinsam mit dem Bewegungsmechanismus (431) bewegen kann.

8. Dreidimensionale Druckvorrichtung mit einem Rührmechanismus, umfassend:
ein Gefäß (1);
eine Formplattform (2), die oberhalb des Gefäßes (1) höhenverstellbar installiert ist;
ein Lichtquellenmodul (3), das unterhalb des Gefäßes (1) installiert ist; und
eine rotierende Rührstruktur (4'), umfassend:
einen Rührer (41'); und
einen Antrieb (43'), der mit dem Rührer (41') gekoppelt und in der Lage ist, den Rührer (41') so anzutreiben, dass dieser sich relativ zu dem Gefäß (1) dreht und bewegt,
**dadurch gekennzeichnet, dass** der Antrieb (43) in der Lage ist, den Rührer, der in das Gefäß (1) eingebracht werden soll, anzutreiben.

9. Dreidimensionale Druckvorrichtung mit einem Rührmechanismus nach Anspruch 8, wobei der Rührer (41') einen Rührblock (411') umfasst und der Rührblock (411') eine Unterseite (4112') und eine geneigte Lasche (4116') aufweist, die sich von der Unterseite (4112') aus erstreckt, und einer Diagonale (L), die durch die Bodenfläche (4112') definiert ist, und die geneigte Lasche (4116') entlang der Diagonale (L) ausgerichtet ist, und beide Enden der geneigten Lasche (4116') jeweils zwei gekrümmte Abschnitte (4118') aufweisen.

10. Dreidimensionale Druckvorrichtung mit einem Rührmechanismus nach Anspruch 9, wobei der Rührer (41') weiterhin eine Vielzahl von Schenkeln (413') aufweist und die Unterseite (4112') eine Vielzahl von hohlen Säulen (4117') aufweist, die sich ausgehend von dieser erstrecken, und jeder der Schenkel (413') in jede entsprechende hohle Säule (4117') eingeführt ist, und jeder Schenkel (413') eine Endposition aufweist, die höher als die Oberseite der geneigten Lasche (4116') ist, und jeder Schenkel (413') eine Materialhärte aufweist, die geringer als die Materialhärte des Gefäßes (1') ist.

11. Dreidimensionale Druckvorrichtung mit einem Rührmechanismus nach Anspruch 8, wobei der Antrieb (43') einen Bewegungsmechanismus (431') und einen Kraftübertragungsmechanismus (432') umfasst, und der Rührer (41') auf den Kraftübertragungsmechanismus (432') aufgesetzt ist und sich gemeinsam mit dem Kraftübertragungsmechanismus (432') drehen kann, und der Kraftübertragungsmechanismus (432') auf den Bewegungsmechanismus (431') aufgesetzt ist und sich gemeinsam mit dem Bewegungsmechanismus (431') bewegen kann.

## Revendications

1. Un dispositif d'impression tridimensionnelle avec un mécanisme d'agitation, comprenant :
un récipient (1) ;
une plate-forme de moulage (2), installée de manière à pouvoir être élevée au-dessus du récipient (1) ;
un module de source lumineuse (3), installé sous le récipient (1) ; et
une structure d'agitation rotative (4), **caractérisée en ce que** la structure d'agitation rotative comprend
un agitateur magnétique (41), installé à l'intérieur du récipient (1) ;
un plateau tournant magnétique (42), installé sous le récipient (1) et attiré magnétiquement par l'agitateur magnétique (41) ; et
un entrainement (43), pour faire tourner et déplacer le plateau tournant magnétique (42), de manière à faire tourner et déplacer l'agitateur magnétique (41) par rapport au récipient (1).

2. Le dispositif d'impression tridimensionnelle avec un mécanisme d'agitation selon la revendication 1, dans lequel l'agitateur magnétique (41) comprend un bloc d'agitation (411) et deux éléments magnétiques (412), et le bloc d'agitation (411) a une surface supérieure (4111), et deux fentes d'insertion (4113) formées respectivement vers le bas à partir des deux extrémités de la surface supérieure (4111), et chacun des éléments magnétiques (412) est encastré dans chaque fente d'insertion (4113) respective.

3. Le dispositif d'impression tridimensionnelle avec un mécanisme d'agitation selon la revendication 2, dans lequel la surface supérieure (4111) présente une poignée (4114) s'étendant vers le haut à partir de son milieu.

4. Le dispositif d'impression tridimensionnelle avec un mécanisme d'agitation selon la revendication 3, dans lequel la surface supérieure (4111) présente deux rainures de réduction de poids (4115) formées vers le bas entre la poignée (4114) et les deux fentes d'insertion (4113).

5. Le dispositif d'impression tridimensionnelle avec un mécanisme d'agitation selon la revendication 2, dans lequel le bloc d'agitation (411) présente une surface inférieure (4112), une languette inclinée (4116) s'étendant à partir de la surface inférieure (4112), et la surface inférieure (4112) définit une diagonale (L), et la languette inclinée (4116) est posée le long de la diagonale (L), et les deux extrémités de la languette inclinée (4116) présentent respectivement deux sections courbes (4118).

6. Le dispositif d'impression tridimensionnelle avec un mécanisme d'agitation selon la revendication 5, dans lequel l'agitateur magnétique (41) comprend en outre une pluralité de pieds (413), la surface inférieure (4112) a une pluralité de colonnes creuses (4117) s'étendant à partir de celle-ci, et chacun des pieds (413) est inséré dans chaque colonne creuse respective (4117), et chaque pied (413) a une position finale plus élevée que la surface supérieure de la languette inclinée (4116), et chaque pied (413) a une dureté de matériau inférieure à la dureté de matériau du récipient (1).

7. Le dispositif d'impression tridimensionnelle avec un mécanisme d'agitation selon la revendication 1, dans lequel l'entrainement (43) comprend un mécanisme de déplacement (431) et un mécanisme de transmission (432), et la table tournante magnétique (42) est installée sur le mécanisme de transmission (432) et capable de tourner avec le mécanisme de transmission (432), et le mécanisme de transmission (432) est installé sur le mécanisme de déplacement (431) et capable de se déplacer avec le mécanisme de déplacement (431).

8. Le dispositif d'impression tridimensionnelle avec un mécanisme d'agitation, comprenant :
un récipient (1) ;
une plate-forme de moulage (2), installée de manière à pouvoir être élevée au-dessus du récipient (1) ;
un module de source lumineuse (3), installé sous le récipient (1) ; et
une structure d'agitation rotative (4'), comprenant :
un agitateur (41') ; et
un entrainement (43'), couplé à l'agitateur (41'), et capable d'entraîner l'agitateur (41') en rotation et en mouvement par rapport au récipient (1),
**caractérisé en ce que** l'entrainement (43) est capable d'entraîner l'agitateur à placer dans le récipient (1).

9. Le dispositif d'impression tridimensionnelle avec un mécanisme d'agitation selon la revendication 8, dans lequel l'agitateur (41') comprend un bloc d'agitation (411'), et le bloc d'agitation (411') a une surface inférieure (4112'), une languette inclinée (4116') s'étendant à partir de la surface inférieure (4112'), et une diagonale (L) définie par la surface inférieure (4112'), et la languette inclinée (4116') est posée le long de la diagonale (L), et les deux extrémités de la languette inclinée (4116') ont deux sections courbes (4118') respectivement.

10. Le dispositif d'impression tridimensionnelle avec un mécanisme d'agitation selon la revendication 9, dans lequel l'agitateur (41') comprend en outre une pluralité de pieds (413'), et la surface inférieure (4112') présente une pluralité de colonnes creuses (4117') s'étendant à partir de celle-ci, et chacun des pieds (413') est inséré dans chaque colonne creuse respective (4117'), et chaque pied (413') a une position finale plus élevée que la surface supérieure de la languette inclinée (4116'), et chaque pied (413') a une dureté matérielle inférieure à la dureté matérielle du vaisseau (1').

11. Le dispositif d'impression tridimensionnelle avec un mécanisme d'agitation selon la revendication 8, dans lequel l'entrainement (43') comprend un mécanisme de déplacement (431') et un mécanisme de transmission (432'), et l'agitateur (41') est installé sur le mécanisme de transmission (432') et capable de tourner avec le mécanisme de transmission (432'), et le mécanisme de transmission (432') est installé sur le mécanisme de déplacement (431') et capable de se déplacer avec le mécanisme de déplacement (431').
